# EUROPÄISCHE PATENTANMELDUNG

(11) **EP 4 059 758 A1**
(43) Veröffentlichungstag der Anmeldung: **21.09.2022**
(21) Anmeldenummer: 22156112.9
(22) Anmeldetag: 10.02.2022
(51) Int. Cl.: B60K 35/00, G02B 27/01

(54) **DYNAMISCHER AR-HINWEIS**

(30) Priorität: 18.03.2021 DE 102021202666
(71) Anmelder: Volkswagen Aktiengesellschaft, 38440 Wolfsburg (DE)
(72) Erfinder: Kunze, Alexander, 13585 Berlin (DE); Jellentrup, Nina, 38106 Braunschweig (DE); Wuttke, Ulrich, 38126 Braunschweig (DE); Haar, Adrian, 30173 Hannover (DE); Tebaibi, Yannis, 38106 Braunschweig (DE); Sandbrink, Johanna, 38102 Braunschweig (DE); Wittkämper, Michael, 38106 Braunschweig (DE); Sadovitch, Vitalij, 38102 Braunschweig (DE); Danneberg, Marco, 39291 Hohenwarth (DE)

(57) **Zusammenfassung**

Die Erfindung betrifft eine Vorrichtung (10) zur verbesserten Visualisierung eines Hinweises (24) in einem Kraftfahrzeug (28) sowie ein entsprechendes System (18) Verfahren und Computer-Programm.

Es ist vorgesehen, dass ein kontaktanaloges Head-Up Display (20) Informationen (24) in direktem Kontakt zur Umgebung platziert. Im Gegensatz zu konventionellen Head-Up Displays erscheinen die Informationen als Teil der Umgebung. Gegenstand der Erfindung ist die Platzierung eines Informationscontainers (34) in einer Distanz x vor dem Fahrzeug (28), welcher entsprechend der Verringerung der Distanz x größer wird und fix zur Umgebung platziert ist, um den Effekt eines in der Realität verorteten Containers zu erzeugen. Infolge des unmittelbaren Realitätsbezugs ist es offensichtlich, dass der Container bei Erreichen seiner in der Umgebung verorteten Position verschwindet, das heißt, es gibt eine klare Kommunikation dass und wann die Information verschwindet. Im Gegensatz dazu kann die Erfordernis einer Interaktion durch das Stehenbleiben des Elements kommuniziert werden. Das heißt kurz vor dem Erreichen der Position des Informationscontainers (34), verbleibt dieser starr im Sichtfeld (26) und wird vor dem Egofahrzeug (28) "hergeschoben". Dadurch ist unmittelbar offensichtlich, dass eine Bedienhandlung erforderlich ist, um das Popup zu quittieren beziehungsweise um dadurch eine Aktion zu triggern.

## Beschreibung

Die Erfindung betrifft eine Vorrichtung zur verbesserten Visualisierung eines Hinweises in einem Kraftfahrzeug sowie ein entsprechendes System, Verfahren und Computer-Programm.

Informative Popups sind ein integraler Bestandteil moderner interaktiver Systeme wie PCs, Smartphones, Tablets und auch Fahrzeugen. Konventionelle Umsetzungen arbeiten häufig mit Time-Outs, um die Anzeigezeit der in der Regel nur temporär relevanten Informationen zu limitieren, beispielsweise bei eingehenden Nachrichten oder im Fahrzeugkontext, Informationen zum Fahrzeugzustand wie "Wischwasser nachfüllen". Dem Nutzer ist bei dieser Umsetzung allerdings keine Prädiktion möglich, wie lange konkret das Popup noch sichtbar ist. Zudem ist der grundlegend temporäre Charakter nicht unmittelbar offensichtlich. Dadurch ist es für den Nutzer nicht eindeutig, ob eine Bedienhandlung erforderlich ist oder nicht. Bedingt durch ein begrenztes Sichtfeld in Head-Up Displays ist es zudem technisch meist nicht möglich, Objekte in der Umgebung direkt zu markieren. Und selbst mit maximalem Sichtfeld, also einer 100%igen Windschutzscheibenabdeckung, werden relevante Objekte erst sehr spät sichtbar beziehungsweise sind vor allem bei höherer Fahrgeschwindigkeit auch nur sehr kurz sichtbar.

Aus der Offenlegungsschrift US 2019/0204104 A1 ist ein "fahrzeuginternes System" bekannt, das eine Markierung anzeigt, die eine Einrichtung darstellt. Eine Head-Up-Anzeige wird verwendet, um die Sichtbarkeit der Einrichtung zu verbessern. Eine Einrichtungsfigur, die eine Einrichtung darstellt, wird auf eine Position gesetzt, die sich, vom Fahrer aus gesehen, mit einer virtuellen Linie parallel zu einer Fahrspur überlappt. Eine Position in Auf-Ab-Richtung der Anzeigeposition überlappt sich mit einer Straßenoberfläche auf der Vorderseite. Nachteilig ist hierbei, dass die offenbarte Lehre eine Erhöhung einer Sichtbarkeit einer Einrichtung beinhaltet. Fahrassistenzinformationen und/oder weitere relevante Informationen werden einem Fahrer nicht vermittelt.

Aus der Offenlegungsschrift US 10,332,292 B1 ist ein Augmentationssystem bekannt, das die Sicht einer Person von mindestens einem tatsächlichen Fahrzeug oder einem virtuellen Fahrzeug einer Umgebung, durch die das Fahrzeug fährt, ergänzen kann. Das System kann einen Empfänger enthalten, der konfiguriert ist, um Datensignale zu empfangen, die für den Betrieb des Fahrzeugs und für Objekte in der Umgebung durch die das Fahrzeug fährt repräsentativ sind. Das System kann auch einen mit dem Empfänger verbundenen Wandler enthalten. Der Wandler kann dazu konfiguriert sein, die Datensignale in Anzeigedaten umzuwandeln, die für den Betrieb des Fahrzeugs und für die Objekte in der Umgebung, durch die das Fahrzeug fährt, repräsentativ sind. Der Wandler kann auch dazu konfiguriert sein, die Anzeigedaten an eine mit dem Wandler verbundene Anzeige zu übermitteln und konfiguriert sein, um in der Sicht der Person vom Fahrzeug aus Bilder anzuzeigen, die für die Anzeigedaten repräsentativ sind, um die Ansicht der Person zu ergänzen. Hierbei handelt es sich um eine Ergänzung der Wahrnehmung eines Fahrers. Nachteilig hierbei ist jedoch, dass es leicht zu Verwirrungen und einer Überfrachtung von Anzeigen kommen kann. Die offenbarte Lehre enthält keinen Hinweis, wie einer Datenüberflutung und Reizüberflutung des Fahrers entgegengewirkt werden kann. Die offenbarte Lehre zeigt lediglich, wie bereits vorhandene Objekte durch AR besonders hervorgehoben werden können.

Aus der Offenlegungsschrift US 2020/0324787 A1 sind ein Augmented-Reality (AR)-Verfahren und eine Vorrichtung zur Fahrunterstützung bekannt, die auf dem technischen Gebiet der AR angewendet werden. Das Verfahren umfasst die folgenden Schritte: Bestimmen von Fahrassistenzinformationen basierend auf während des Fahrprozesses erfassten Informationen und Anzeigen virtueller dreidimensionaler Anzeigeinformationen, die den Fahrassistenzinformationen entsprechen. In der vorliegenden Erfindung kann die AR-Technologie im Fahrzeugfahrprozess angewendet werden, um einen Fahrer bei der besseren Beherrschung von Fahrinformationen im Fahrzeugfahrprozess zu unterstützen und die Benutzererfahrung kann verbessert werden. Nachteilig ist hierbei, dass die offenbarte Lehre das Darstellen von Fahrassistenzinformationen beinhaltet. Ein Gültigkeitsbereich und insbesondere eine Anzeigedauer der Fahrassistenzinformationen wird einem Fahrer nicht vermittelt. Hierdurch kann der Fahrer in Stress verfallen und muss sich auf die eingeblendeten Fahrassistenzinformationen konzentrieren, um diese zu erfassen, bevor sie nichtmehr eingeblendet werden. Das führt zu einem hohen Ablenkungsgrad des Fahrers.

Die Offenlegungsschrift DE 10 2020 002 992 A1 zeigt ein Verfahren zur Darstellung eines einen Bildbereich überlagernden Objektes, wobei der Bildbereich ein digitales Bild eines Ausschnitts oder ein durch eine Windschutzscheibe sichtbarer Ausschnitt einer Umgebung eines Fahrzeugs ist. Gemäß einem ersten Schritt des Verfahrens wird eine Referenzposition im Bildbereich bestimmt und das Objekt an der Referenzposition kontaktanalog angezeigt. Mit Bestimmung einer aufgrund einer Fahrzeugbewegung bewirkten Angrenzung des Objektes an einer Randlinie des Bildbereiches wird zur Verhinderung einer Auswanderung aus dem Bildbereich eine weitere Bewegung in Richtung außerhalb des Bildbereichs gestoppt, die kontaktanaloge Darstellung aufgehoben und das Objekt an dem Rand verortet dargestellt. Zudem wird das an der Randlinie verortete Objekt - bei Vergrößerung des Abstands zwischen der Referenzposition und der Randlinie in Richtung der Abstandsänderung verkleinert und/oder - bei Verkleinerung des Abstands zwischen der Referenzposition und der Randlinie in Richtung der Abstandsänderung vergrößert.

Die Offenlegungsschrift DE 195 39 799 A1 betrifft eine Informationseinrichtung für Kraftfahrzeuge mit einer Verarbeitungseinrichtung, die anzeigbare Informationssignale in Form von Symbolen in Abhängigkeit von Sensoren erfassten Messsignalen und/oder von außen erhaltenen Signalen bildet. Zur Erzielung eines großen Informationsgehaltes bei einer geringen Ablenkung des Fahrers vom Fahrgeschehen erfolgt auf dem Anzeigefeld eine Veränderung des dargestellten Symbols mindestens eines der Informationssignale in Beziehung auf den betragsmäßigen Werten der zugehörigen Signale.

Die Offenlegungsschrift US 2015/0 331 487 A1 offenbart ein System für ein Fahrzeug umfassend ein Head-up-Display und eine mit dem Head-up-Display verbundene Zentraleinheit, wobei das Head-up-Display dazu konfiguriert ist, ein Bild auf eine Frontscheibe des Fahrzeugs oder auf einen separaten Kombinierer zu projizieren, wobei die Zentraleinheit dazu konfiguriert ist, Bilddaten zur Anzeige an das verbundene Head-up-Display zu senden, um eine Position der Augen des Benutzers zu ermitteln, um ein Symbol innerhalb der Bilddaten auszugeben, einen ersten virtuellen Punkt und einen zweiten virtuellen Punkt in einer Umgebung des Fahrzeugs basierend auf einem aufgenommenen Bild der Umgebung und/oder einer aktuellen Position des Fahrzeugs zu ermitteln, und das Symbol so zu positionieren, dass ein Anfangspunkt des Symbols den ersten virtuellen Punkt überlappt und ein Endpunkt des Symbols den zweiten virtuellen Punkt in einer Sicht des Benutzers überlappt.

Die Offenlegungsschrift DE 103 12 719 A1 betrifft eine elektrooptische Anzeige für ein Navigationssystem, bei welcher die Struktur der Anzeige festgelegt ist und die ein zentrales grafisches Bildzeichen enthält, mit dem eine empfohlene Bewegungsrichtung darstellbar ist. Das Bildzeichen besteht aus einzeln aktivierbaren Teilelementen, wobei die Teilelemente Punkte sowie eine gleiche Anzahl von Geraden und Pfeilspitzen sind und konzentrisch angeordnet sind.

Der Erfindung liegt nun die Aufgabe zugrunde, eine verbesserte Möglichkeit zu schaffen, einem Fahrer Informationen verständlich und leicht erfassbar zu vermitteln. Vorzugsweise soll der Fahrer dabei seinen Blick auf den Straßenverlauf richten können.

Gelöst wird diese Aufgabe durch eine Vorrichtung zur verbesserten Visualisierung eines Hinweises in einem Kraftfahrzeug, mit:
- einer Eingangsschnittstelle zum Empfangen von Hinweis-Daten mit Informationen zu dem Hinweis und Fahrzeugdaten mit Informationen zu einem Fahrzeugzustand;
- einer Analyseeinheit zum Bestimmen einer Darstellung für den Hinweis basierend auf den Hinweis-Daten und den Fahrzeugdaten und zum Erzeugen eines Steuerbefehls zum Steuern eines AR-Anzeigegeräts basierend auf der Darstellung für den Hinweis;
- einer Ausgangsschnittstelle zum Übermitteln des Steuerbefehls an das AR-Anzeigegerät, wobei der Steuerbefehl eine dynamische Darstellung des Hinweises bewirkt, wobei anhand der Dynamik der Darstellung des Hinweises ein Gültigkeitsbereich für den Hinweis vermittelbar ist.

Ferner wird die obige Aufgabe gelöst von einem System zur verbesserten Visualisierung eines Hinweises in einem Kraftfahrzeug, mit:
einer Vorrichtung, wie zuvor definiert; und
einem AR-Anzeigegerät, insbesondere einem Head-Up-Display an einem Kraftfahrzeug, zum Ausgeben einer dynamischen Darstellung des Hinweises in Reaktion auf einen Steuerbefehl der Vorrichtung.

Die obige Aufgabe wird zudem gelöst von einem Verfahren zur verbesserten Visualisierung eines Hinweises in einem Kraftfahrzeug, mit:
- Empfangen von Hinweis-Daten mit Informationen zu dem Hinweis und Fahrzeugdaten mit Informationen zu einem Fahrzeugzustand;
- Bestimmen einer Darstellung für den Hinweis basierend auf den Hinweis-Daten und den Fahrzeugdaten;
- Erzeugen eines Steuerbefehls zum Steuern eines AR-Anzeigegeräts basierend auf der Darstellung für den Hinweis;
- Übermitteln des Steuerbefehls an das AR-Anzeigegerät, wobei der Steuerbefehl eine dynamische Darstellung des Hinweises bewirkt, wobei anhand der Dynamik der Darstellung des Hinweises ein Gültigkeitsbereich für den Hinweis vermittelbar ist.

Durch eine Eingangsschnittstelle kann eine kosteneffiziente Vorrichtung geschaffen werden, die vorzugsweise mit vorhandenen, im Kraftfahrzeug verbauten Systemen, Modulen und Einheiten verwendet werden kann. Eine Eingangsschnittstelle kann dabei kabelgebunden und/oder drahtlos ausgebildet sein und vorzugsweise ein oder mehrere Kommunikationsprotokolle unterstützen. Durch eine Analyseeinheit kann eine vorteilhafte Darstellung für den Hinweis bestimmt werden, bei der eine Sichtbarkeit des Hinweissymbols für den Fahrer erhöht ist und der Fahrer intuitiv leicht einen Gültigkeitsbereich des Hinweises erfassen kann. Dadurch, dass basierend auf den Hinweis-Daten und den Fahrzeugdaten eine vorteilhafte Darstellung ermittelbar ist, kann dynamisch und situationsabhängig auf ein anzuzeigendes Hinweissymbol eingegangen werden. Die Sicherheit im Straßenverkehr wird erhöht. Eine Ausgangsschnittstelle ermöglicht eine kosteneffiziente Vorrichtung, die vorzugsweise mit vorhandenen Ausgabegeräten verwendet werden kann. Durch das Verwenden einer Eingangsschnittstelle zum Empfangen von Daten mit Informationen zu dem Hinweis für den Fahrer kann eine technisch einfache und kostengünstige Vorrichtung geschaffen werden, die insbesondere nicht selbst zum Erfassen der Informationen ausgebildet sein muss. Somit kann die Vorrichtung in bereits bestehende Navigations- oder Infotainmentsysteme integriert werden. Mittels einer Ausgangsschnittstelle können bereits in Kraftfahrzeug verbaute Komponenten zur Anzeige verwendet werden. Ferner ist es denkbar, ein AR-Anzeigegerät nachzurüsten und/oder mehrere AR-Anzeigegeräte kombiniert zu verwenden. Vorzugsweise umfasst die vorteilhafte Darstellung einen Container, der in einem Bereich vor dem Kraftfahrzeug verortet ist.

In bevorzugter Ausgestaltung der Erfindung ist vorgesehen, dass die Ausgangsschnittstelle zum Übermitteln des Steuerbefehls an ein AR-Anzeigegerät in Form eines AR HUDs ausgebildet ist und vorzugsweise zur Installation in ein Kraftfahrzeug ausgebildet ist und besonders bevorzugt Teil eines Bordcomputers, Infotainment- und/oder Navigationssystems ist. Hierdurch kann der Fahrer eine für sich verständliche Konfiguration wählen. Die Akzeptanz, der Komfort und das Verständnis des Systems können verbessert und erhöht werden. Ein Steuerbefehl für ein AR HUD ermöglicht eine verbesserte Visualisierung der Information für einen Fahrer. Insbesondere kann ein Fahrer seinen Blick auf die Fahrbahn richten und muss nicht auf ein zusätzliches Display im Kraftfahrzeug schauen. Die Sicherheit im Straßenverkehr wird erhöht.

In weiterer bevorzugter Ausgestaltung der Erfindung ist vorgesehen, dass die Analyseeinheit einen Steuerbefehl bestimmt, der eine dynamische Darstellung des Hinweises bewirkt, die eine Darstellung eines Countdowns umfasst, wobei der Countdown vorzugsweise grafisch als Balken und/oder numerisch als Prozentzahl darstellbar ist. Hierdurch kann dem Fahrer auf direkt verständliche Weise der Gültigkeitsbereich, insbesondere eine Gültigkeitsdauer, des Hinweises vermittelt werden.

In weiterer bevorzugter Ausgestaltung der Erfindung ist vorgesehen, dass der Gültigkeitsbereich für den Hinweis eine örtliche, zeitliche und/oder fahrzeugzustand-abhängige Gültigkeit umfasst. Hierdurch kann erreicht werden, dass nur dann ein Hinweis ausgegeben wird, wenn dem Fahrer eine Information übermittelt werden soll oder eine Handlung durch den Fahrer ausgeführt werden soll. Die Akzeptanz, der Komfort und das Verständnis des Systems können verbessert und erhöht werden. Insbesondere kann verhindert werden, dass eine Überladung des Sichtfelds durch nicht benötigte Hinweise erfolgt. Beispielsweise kann eine erlaubte Höchstgeschwindigkeit nur dann angezeigt werden, wenn ein Fahrer die erlaubte Höchstgeschwindigkeit oder einen vordefinierten Schwellenwert, überschreitet.

In weiterer bevorzugter Ausgestaltung der Erfindung ist vorgesehen, dass die Eingangsschnittstelle dazu ausgebildet ist, Fahrzeugdaten mit Informationen zu einem Fahrzeugzustand zu empfangen, wobei der Fahrzeugzustand eine Geschwindigkeit, Orientierung und/oder Position des Kraftfahrzeugs umfasst. Hierdurch kann der Gültigkeitsbereich für den Hinweis verbessert bestimmt werden. Insbesondere kann der Gültigkeitsbereich dynamisch auf die jeweilige Fahrsituation bestimmt werden. Der Komfort wird erhöht.

In weiterer bevorzugter Ausgestaltung der Erfindung ist vorgesehen, dass die Analyseeinheit einen Steuerbefehl bestimmt, der eine dynamische Darstellung des Hinweises in Form eines Informationscontainers bewirkt, wobei der Informationscontainer in einer vordefinierten Distanz vor dem Kraftfahrzeug fix zur Umgebung per Augmented-Reality verortet ist. Dabei kann der Informationscontainer entsprechend der Verringerung der Distanz größer werden, um den Effekt eines in der Realität verorteten Containers zu erzeugen. Hierdurch erkennt ein Fahrer intuitiv den Gültigkeitsbereich des Hinweises. Der Fahrer kann sich auf das Fahren konzentrieren, da er den Hinweis samt Gültigkeitsbereich erfasst, wie beispielsweise ein Verkehrsschild. Es ist kein Einlernen des Fahrers nötig. Die Vorrichtung kann höchst intuitiv Informationen vermitteln.

In weiterer bevorzugter Ausgestaltung der Erfindung ist vorgesehen, dass die Analyseeinheit einen Steuerbefehl bestimmt, der ein Verschwinden des Informationscontainers bei Erreichen seiner in der Umgebung verorteten Position bewirkt, vorzugsweise basierend darauf, ob der Informationscontainer eine temporär relevante Information umfasst oder ein Verbleiben des Informationscontainers vor dem Kraftfahrzeug bei und nach Erreichen seiner in der Umgebung verorteten Position bewirkt, vorzugsweise basierend darauf, ob eine Bedienhandlung des Fahrers erforderlich ist. Hierdurch kann der Fahrer, wenn nötig, subtil und direkt verständlich auf das Erfordernis einer Bedienhandlung hingewiesen werden.

Weitere bevorzugte Ausgestaltungen der Erfindung ergeben sich aus den übrigen, in den Unteransprüchen genannten Merkmalen. Insbesondere kann vorgesehen sein, dass ein kontaktanaloges Head-Up Display Informationen in direktem Kontakt zur Umgebung platziert. Im Gegensatz zu konventionellen Head-Up Displays erscheinen die Informationen als Teil der Umgebung. Gegenstand der Erfindung ist die Platzierung eines Informationscontainers in einer Distanz x vor dem Fahrzeug, welcher entsprechend der Verringerung der Distanz x größer wird und fix zur Umgebung platziert ist, um den Effekt eines in der Realität verorteten Containers zu erzeugen. Infolge des unmittelbaren Realitätsbezugs ist es offensichtlich, dass der Container bei Erreichen seiner in der Umgebung verorteten Position verschwindet, das heißt, es gibt eine klare Kommunikation dass und wann die Information verschwindet. Im Gegensatz dazu kann das Erfordernis einer Interaktion durch das Stehenbleiben des Elements kommuniziert werden. Das heißt, kurz vor dem Erreichen der Position des Informationscontainers, verbleibt dieser starr im Sichtfeld und wird vor dem Egofahrzeug "hergeschoben". Dadurch ist unmittelbar offensichtlich, dass eine Bedienhandlung erforderlich ist, um das Popup zu quittieren beziehungsweise um dadurch eine Aktion zu triggern, beispielsweise eine Routenführung. Es versteht sich, dass diese Art von 3D-Popups für eine Vielzahl von Informationen verwendet werden kann, beispielsweise zur Kommunikation der restlichen Distanz zum Navigationsziel, zur Kommunikation von naheliegenden Ladesäulen und anderen Points of Interest wie Sightseeing-Objekten.

Die verschiedenen in dieser Anmeldung genannten Ausführungsformen der Erfindung sind, sofern im Einzelfall nicht anders ausgeführt, mit Vorteil miteinander kombinierbar.

Das Head-Up-Display (HUD; wörtlich: "Kopf-oben-Anzeige") ist ein Anzeigesystem, bei dem der Nutzer seine Blickrichtung und damit seine Kopfhaltung beibehalten kann, weil die Informationen in sein Sichtfeld projiziert werden. Zu den Nutzern gehören neben Piloten unter anderem auch Autofahrer. Insbesondere kann mit einem HUD eine erweiterte Realität (auch Englisch Augmented-Reality, kurz AR) kombiniert werden. AR bedeutet dabei eine computergestützte Erweiterung der Realitätswahrnehmung. Diese Information kann alle menschlichen Sinnesmodalitäten ansprechen. Häufig wird jedoch unter erweiterter Realität nur die visuelle Darstellung von Informationen verstanden, also die Ergänzung von Bildern oder

Videos mit computergenerierten Zusatzinformationen oder virtuellen Objekten mittels Einblendung/Überlagerung.

Ein Informationscontainer, kann insbesondere eine Umrandung eines Hinweises umfassen, um eine verbesserte Verortung und ein erhöhtes Erkennen und leichteres Erfassen des Hinweises durch den Fahrer zu ermöglichen.

Die Erfindung wird nachfolgend in Ausführungsbeispielen anhand der zugehörigen Zeichnungen erläutert. Es zeigen:
- Figur 1: eine schematische Darstellung einer Vorrichtung zur verbesserten Visualisierung eines Hinweises in einem Kraftfahrzeug;
- Figur 2: eine schematische Darstellung einer Variante eines erfindungsgemäßen Systems;
- Figur 3: eine schematische Darstellung einer weiteren Variante eines erfindungsgemäßen Systems in einem Fahrzeug;
- Figur 4: eine schematische Darstellung einer Situation im Straßenverkehr aus der Vogelperspektive;
- Figur 5a-c: schematische Darstellungen von Ausgaben des Systems auf einem AR-Anzeigegerät; und
- Figur 6: eine schematische Darstellung der Schritte eines erfindungsgemäßen Verfahrens.

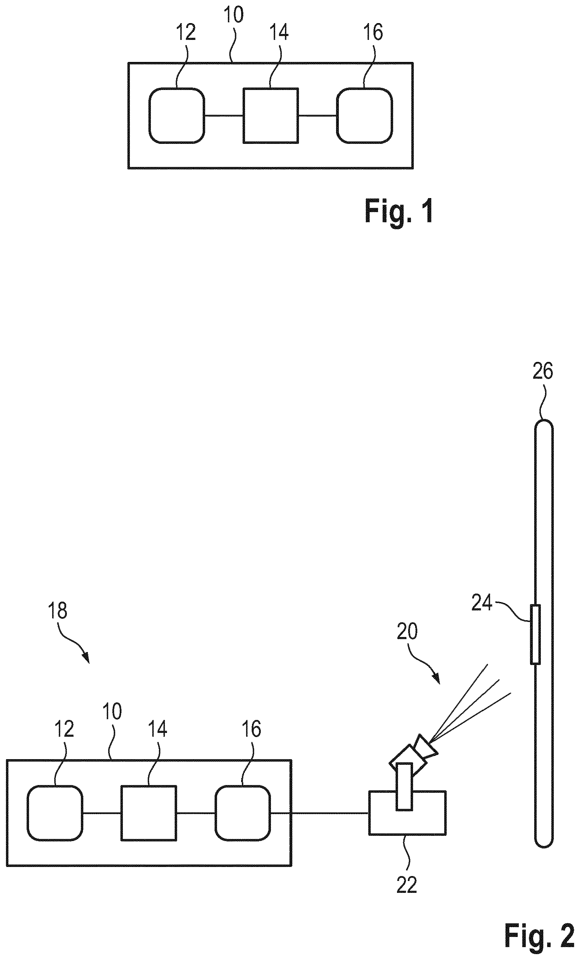

Figur 1 zeigt eine schematische Darstellung einer Vorrichtung 10 zur verbesserten Visualisierung eines Hinweises in einem Kraftfahrzeug. Die Vorrichtung 10 umfasst eine Eingangsschnittstelle 12, eine Analyseeinheit 14 und eine Ausgangsschnittstelle 16.

Die Eingangsschnittstelle 12 ist dazu ausgebildet, Daten umfassend Hinweis-Daten mit Informationen zu dem Hinweis und Fahrzeugdaten mit Informationen zu einem Fahrzeugzustand zu empfangen. Die Daten können beispielsweise eine Geschwindigkeit oder einen Navigationshinweis umfassen und beispielsweise von einem Tachometer, GPS-Empfänger und/oder Navigationssystem stammen. Ferner können die Daten Sensordaten eines Fahrassistenzsystems umfassen, wie ein detektiertes vorausfahrendes Fahrzeug, eine Schilderkennung oder dergleichen. Zum Empfangen ist die Eingangsschnittstelle 12 vorzugsweise an ein fahrzeuginternes Übertragungsnetz angeschlossen. Ferner kann die Eingangsschnittstelle 12 auch zur drahtlosen Kommunikation ausgebildet sein oder mit einem proprietären, beispielsweise kabelgebundenen, Übertragungsnetz verbunden sein.

Die Analyseeinheit 14 ist dazu ausgebildet, die Daten zu empfangen und einen Steuerbefehl zu generieren, wobei der Steuerbefehl eine dynamische Darstellung des Hinweises bewirkt, wobei anhand der Dynamik der Darstellung des Hinweises ein Gültigkeitsbereich für den Hinweis vermittelbar ist. Der Gültigkeitsbereich kann insbesondere eine zeitliche, örtliche und/oder fahrzeugzustand-abhängige Gültigkeit umfassen. Die Analyseeinheit 14 bestimmt eine Darstellung für den Hinweis basierend auf den Hinweis-Daten und den Fahrzeugdaten. Eine Darstellung kann beispielsweise eine Modifikation von Größe, Farbe, Farbsättigung, Transparenz, eine Vereinfachung eines Hinweissymbols und/oder Darstellungsdauer eines oder mehrerer Hinweissymbole umfassen.

Die Ausgangsschnittstelle 16 ist dazu ausgebildet, den Steuerbefehl an ein AR-Anzeigegerät zu übermitteln. Die Ausgangsschnittstelle 16 kann analog zur Eingangsschnittstelle 12 zur Kommunikation ausgebildet sein. Es versteht sich, dass die Eingangsschnittstelle 12 und die Ausgangschnittstelle 16 auch kombiniert als Kommunikationsschnittstelle zum Senden und Empfangen ausgebildet sein können.

Figur 2 zeigt eine schematische Darstellung eines erfindungsgemäßen Systems 18 mit einer Vorrichtung 10 und einem AR-Anzeigegerät 20 mit einer Projektionseinheit 22.

Die Vorrichtung 10 empfängt Daten umfassend Hinweis-Daten und/oder Fahrzeugdaten. Diese Daten können beispielsweise eine Geschwindigkeit des Kraftfahrzeugs, Daten eines Eye-Tracking-Sensors, Daten zur Verkehrslage, Positionsdaten des Kraftfahrzeugs, Daten bezüglich einer Position einer Gefahrenquelle, Navigationsdaten, eine Orientierung des Kraftfahrzeugs sein.

Auf Basis der Daten erstellt die Vorrichtung 10 einen Steuerbefehl für das AR-Anzeigegerät 20 und bewirkt so eine Darstellung insbesondere in Form einer dynamischen modifizierten Ausgabe eines Hinweises 24 auf einer Frontscheibe 26 eines Kraftfahrzeugs. In dem gezeigten Beispiel umfasst das AR-Anzeigegerät 20 ein Head-Up-Display, wobei die Projektionseinheit 22 beweglich ausgebildet ist und beispielsweise mittels Aktoren bewegt werden kann, so dass der Hinweis 24 an eine Position im Sichtfeld des Fahrers an der Frontscheibe 26 projiziert werden kann. Insbesondere kann eine Größe des Hinweises 24 variiert werden. Hierdurch kann der Hinweis 24 direkt an der Frontscheibe 26 des Kraftfahrzeugs angezeigt werden.

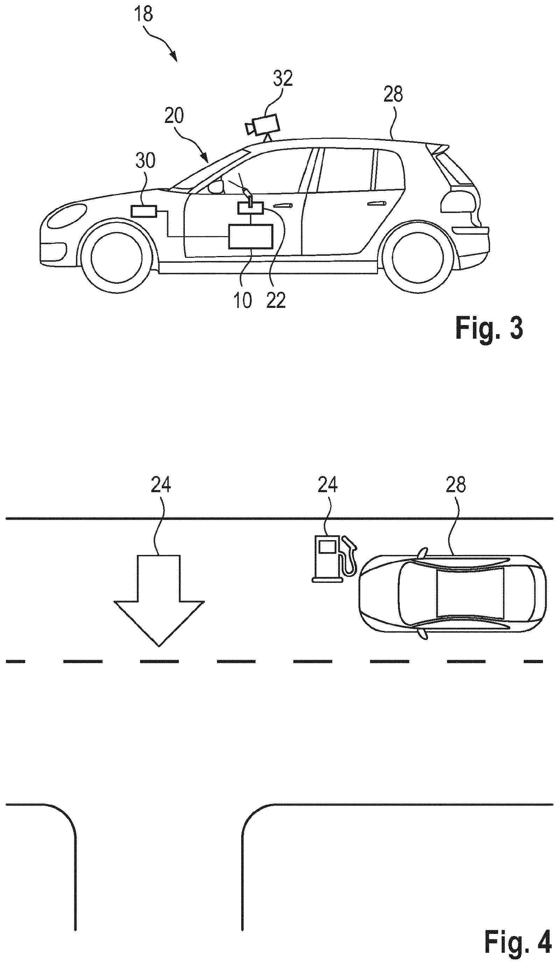

Figur 3 zeigt eine schematische Darstellung einer Variante des erfindungsgemäßen Systems 18 in einem Kraftfahrzeug 28. Das erfindungsgemäße System 18 umfasst eine Vorrichtung 10 und ein AR-Anzeigegerät 20. Das AR-Anzeigegerät 20 umfasst in dem gezeigten Beispiel eine Projektionseinheit 22, die an die nicht näher gezeigte Frontscheibe 26 des Kraftfahrzeugs 28 projizieren kann.

Die Vorrichtung 10 empfängt, wie oben beschrieben, Daten umfassend Hinweis-Daten und/oder Fahrzeugdaten. In dem gezeigten Beispiel ist das System 18 mit einem Fahrzeugmodul 30 wie beispielsweise einem Navigationssystem verbunden und empfängt Navigationsdaten. Es versteht sich, dass das System 18 auch mit dem Navigationssystem als eigenständige Einheit ausgebildet sein kann. In dem gezeigten Beispiel kann das Navigationssystem eine Einheit bilden, die eine Information bestimmt, wie eine Navigationsaufforderung, die einem Fahrer übermittelt werden soll. Weitere Daten können von einer Frontkamera 32, beispielsweise zum Bestimmen einer Situation vor dem Kraftfahrzeug 28, stammen. Es versteht sich, dass auch weitere prinzipiell im Stand der Technik bekannte Sensoren Anwendung finden können. Insbesondere kann eine Sensordatenfusion von Daten aus mehreren Sensoren erfolgen, um eine höhere Datenqualität zu erreichen. Ferner kann das Fahrzeugmodul 30 auch ein Steuergerät des Kraftfahrzeugs 28 umfassen, wobei mittels des Hinweises 24 dem Fahrer eine notwendige Bedienhandlung, wie Wischwasser auffüllen, ein defektes Leuchtmittel tauschen, oder dergleichen vermittelt werden kann.

Die Vorrichtung 10 analysiert die empfangenen Daten und bestimmt einen Steuerbefehl, der eine dynamische Darstellung des Hinweises 24 bewirkt, wobei anhand der Dynamik der Darstellung des Hinweises 24 ein Gültigkeitsbereich für den Hinweis 24 vermittelbar ist. Der Hinweis 24 kann gemäß der Darstellung, wie oben beschrieben, ausgegeben werden und von einem Fahrer erkannt werden.

In Figur 4 ist schematisch eine Situation im Straßenverkehr gezeigt, bei der ein Kraftfahrzeug 28 einen Navigationshinweis zum Abbiegen in Fahrtrichtung links in eine Einmündung erhält. Dieser Hinweis 24 ist in Fahrtrichtung auf Höhe der Einmündung verortet. Ferner wurde von einem nicht gezeigten Sensor des Kraftfahrzeugs 28 erkannt, dass ein Auftanken des Kraftfahrzeugs 28 nötig ist. Daher ist der Hinweis 24, der den Fahrer zum Tanken auffordern soll, bereits vor dem Kraftfahrzeug 28 verortet und wird in diesem Beispiel derart dargestellt als würde der Hinweis 24 vor dem Kraftfahrzeug 28 hergeschoben.

Es versteht sich, dass die Darstellung der Hinweise 24 auf der Fahrbahn nur schematisch und stark vereinfacht sind. Es versteht sich ferner, dass die Art des Hinweises 24 und die damit verbundene Information und/oder Aufforderung an den Fahrer nur beispielhaft gewählt wurde.

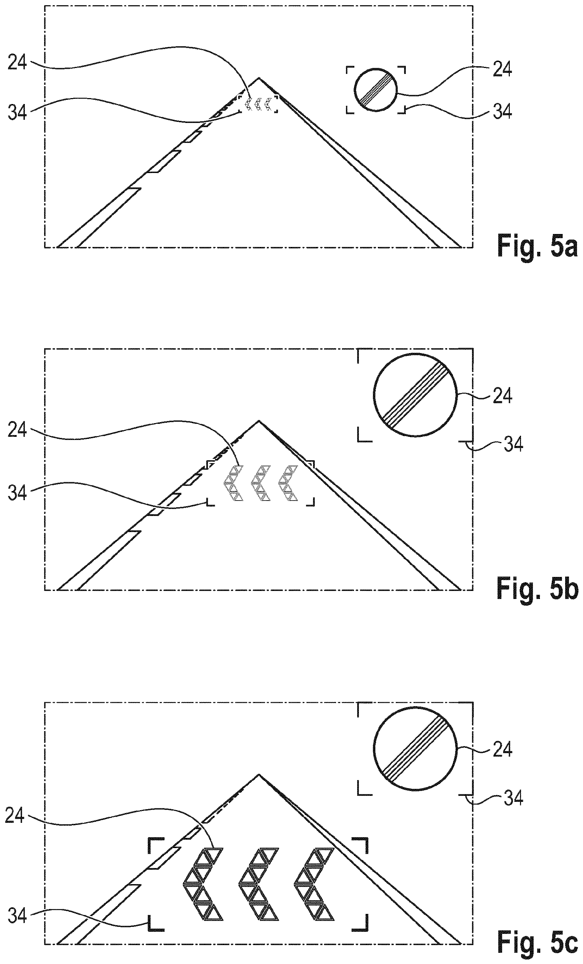

In den Figuren 5a bis 5c sind Ausgaben in Form von Hinweisen 24 des Systems 18 auf einem AR-Anzeigegerät 20, die in Informationscontainern 34 aufgenommen sind, schematisch gezeigt. Dabei ist in den Figuren 5a bis 5c eine zeitliche Abfolge einer Fahrt eines Kraftfahrzeugs 28 aus der Fahrerperspektive schematisch dargestellt.

In der in Figur 5a gezeigten Situation ist ein Navigations-Hinweis 24 weit vor dem Kraftfahrzeug 28 verortet. Der Navigations-Hinweis 24 umfasst einen Manöverpfeil nach links. Ein weiterer Hinweis 24 umfasst die Information, dass auf der Strecke keine Beschränkung mehr gilt und ist in Form eines Verkehrsschilds dargestellt. Dieser Hinweis 24 ist näher am Kraftfahrzeug 28 verortet als der Manöverpfeil.

In der in Figur 5b gezeigten Situation ist der Navigations-Hinweis 24 näher am Kraftfahrzeug 28 verortet. Dieser Eindruck wird dadurch erreicht, dass der Navigations-Hinweis 24 größer dargestellt ist. Insbesondere kann die Größe des Navigations-Hinweises 24 mit der Geschwindigkeit und/oder zurückgelegten Strecke des Kraftfahrzeugs 28 variieren, sodass der Eindruck entsteht, der Navigations-Hinweis 24 befindet sich fest verortet vor dem Kraftfahrzeug 28 und das Kraftfahrzeug 28 fährt auf den Navigations-Hinweis 24 zu. Der Hinweis 24 mit der Information, dass auf der Strecke keine Beschränkung mehr gilt, ist direkt vor dem Kraftfahrzeug 28 verortet und wird in der Folge vor dem Kraftfahrzeug 28 weiter angezeigt bleiben, als würde das Kraftfahrzeug 28 den Hinweis 24 vor sich herschieben. Es versteht sich, dass auch vorgesehen sein kann den Hinweis 24 nach einer vordefinierten und insbesondere konfigurierbaren Zeitspanne auszublenden. Insbesondere ist der Hinweis 24 mit der Information, dass auf der Strecke keine Beschränkung mehr gilt, dort verortet, wo auf der Strecke keine Beschränkung mehr gilt.

In der in Figur 5c gezeigten Situation ist der Navigations-Hinweis 24 direkt vor dem Kraftfahrzeug 28 verortet. Es soll damit vermittelt werden, dass ein Spurwechsel oder ein Abbiegemanöver durchgeführt werden soll. Der Navigations-Hinweis 24 wird nach dem Passieren vorzugsweise nicht mehr angezeigt, da das Abbiegen oder der Spurwechsel durchgeführt wurde. Selbst wenn keine Handlung erfolgt ist, wird der Navigations-Hinweis 24 nichtmehr angezeigt, da er nichtmehr gültig ist. Die Gültigkeit des Navigations-Hinweises 24 wird durch die Verortung und die zunehmend größer-werdende Darstellung vermittelt. Der Hinweis 24 mit der Information, dass auf der Strecke keine Beschränkung mehr gilt, ist weiterhin gültig, und kann daher weiter angezeigt werden. Es versteht sich, dass der Fahrer durch eine Bedieneingabe quittieren kann, dass er den Hinweis 24 wahrgenommen hat und dieser nichtmehr anzeigt werden soll. Zudem kann vorgesehen sein, den Hinweis 24 nach einer vordefinierten Zeitspanne auszublenden.

Alternativ kann auch der folgende Ablauf zum Darstellen eines Hinweises 24 durchgeführt werden. Es erfolgt eine vertikale Platzierung des Hinweises 24 ähnlich wie ein Wegweiser, der den Hinweis 24 enthält und per AR beispielsweise einen Meter über der Fahrbahnoberfläche positioniert ist. Der Hinweis 24 wird per AR modifiziert, solange er sich im Sichtfeld des Insassen/Fahrers befindet. Würde der Hinweis 24 aufgrund der AR-Modifikation das Sichtfeld verlassen, wird der Hinweis auf eine nächstgelegene Kante des Sichtfelds verschoben. Eine AR-Modifikation umfasst insbesondere das Ändern einer Größe des Hinweises 24 mit der zurückgelegten Strecke oder gefahrenen Geschwindigkeit, so dass der Eindruck eines auf den Hinweis 24 Zufahrens entsteht.

Der Hinweis 24 befindet sich in einer Entfernung vor der Position des Kraftfahrzeugs 28. Dies führt zu einer Größe des Symbols von beispielsweise mindestens 60 Pixel. Die Größe ist konfigurierbar. Eine Zeichenhöhe des Hinweises 24 kann entsprechend skaliert werden.

Eine Zeitspanne für das Einblenden kann beispielsweise 266 ms betragen. Der Hinweis 24 wird vorzugsweise vergrößert, bis die maximale Schriftgröße erreicht ist. Der Hinweis 24 kann dabei seine maximale Größe für beispielsweise 1000 ms beibehalten, bevor er innerhalb von 266 ms zur Transparenz ausgeblendet wird.

Falls das Kraftfahrzeug 28 0 km/h erreicht, kann ein Timer starten, wobei nach beispielsweise einer Zeitspanne von 1000 ms mit V = 0 km/h der Hinweis 24 (wie oben beschrieben) bis zur vollständigen Transparenz ausgeblendet wird. Falls sich das Kraftfahrzeug 28 in kürzerer Zeit wieder in Bewegung setzt, wird der Hinweis 24 weiter angezeigt und das Verfahren wird fortgesetzt.

Eine Startgröße des Hinweises 24 kann beispielsweise abhängig von der Ego-Geschwindigkeit, bestimmt werden. Beispielsweise kann bei sehr niedrigen Geschwindigkeiten, beispielsweise im Stau, eine Zunahme der Größe von einem Minimalwert zu einem Maximalwert beispielsweise 60 Sekunden dauern. Um dem entgegenzuwirken, sollte die Startgröße von der Ego-Geschwindigkeit abhängen.

Wird das Kraftfahrzeug 28 ohne eine aktive Routenführung betrieben, ist dem System 18 nicht bekannt, welchen Weg das Kraftfahrzeug 28 nehmen wird. Folglich kann eine feste Verortung des Hinweises 24 nur erschwert durchgeführt werden. Vorzugsweise kann dann eine Implementierung mit einer Lanzenanalogie Anwendung finden. Hierbei wird der Hinweis 24 vor dem Kraftfahrzeug 28 dargestellt, als ob der Hinweis 24 an einer Spitze einer Lanze aus dem Kraftfahrzeug 28 heraus in Fahrtrichtung angebracht wäre. Die Länge der nicht dargestellten Lanze kann verwendet werden, um einen AR-Effekt zu erzeugen. Dabei kann die Länge der Lanze mit der zurückgelegten Strecke abnehmen, sodass der Hinweis 24 näher zum Kraftfahrzeug 28 gelangt, also größer dargestellt wird. Beispielsweise kann das Integral der Geschwindigkeit als Maß für die zurückgelegte Strecke dienen.

Die wahrnehmbare Größenänderung des Hinweises 24 sollte dabei die Geschwindigkeit wiederspiegeln und die Längsposition des Hinweises 24 sollte direkt und dynamisch die Geschwindigkeit des Kraftfahrzeugs 28 wiederspiegeln. Das heißt, der Hinweis 24 sollte mit hoher Geschwindigkeit größer werden. Eine Kurve hat demnach vorzugsweise keine Auswirkungen auf die Darstellung des Hinweises 24, wobei insbesondere nur die zurückgelegte Strecke und die Geschwindigkeit sich auswirken.

Es versteht sich, dass die vorgenannten Größen und Zeitspannen nur beispielhaft gewählt wurden und insbesondere konfigurierbar sind.

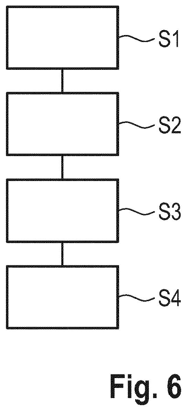

In Figur 6 sind schematisch die Schritte eines erfindungsgemäßen Verfahrens zur verbesserten Visualisierung eines Hinweises 24 in einem Kraftfahrzeug 28 dargestellt. Das Verfahren kann bevorzugt mit einem System 18 und/oder einer Vorrichtung 10, wie zuvor beschrieben, durchgeführt werden.

In einem ersten Schritt S1 erfolgt ein Empfangen von Hinweis-Daten mit Informationen zu dem Hinweis 24 und Fahrzeugdaten mit Informationen zu einem Fahrzeugzustand.

In einem zweiten Schritt S2 wird eine Darstellung für den Hinweis 24 basierend auf den Hinweis-Daten und den Fahrzeugdaten bestimmt.

In einem dritten Schritt S3 wird ein Steuerbefehl zum Steuern eines AR-Anzeigegeräts 20 basierend auf der Ausgabekonfiguration erzeugt.

In einem vierten Schritt S4 erflogt schließlich ein Übermitteln des Steuerbefehls an das AR-Anzeigegerät 20.

Der Steuerbefehl bewirkt dabei eine dynamische Darstellung des Hinweises 24, wobei anhand der Dynamik der Darstellung des Hinweises 24 ein Gültigkeitsbereich für den Hinweis 24 vermittelbar ist.

Die Erfindung wurde ausführlich beschrieben. Es versteht sich, dass die gewählten Ausführungsformen nur beispielhaft zum besseren Verständnis der Erfindung so gewählt wurden. Ein Fachmann erkennt, dass die Erfindung auf eine Vielzahl von Hinweissymbolen zu vermittelnden Informationen und Aufforderungen an den Fahrer anwendbar ist. Weiterhin erkennt ein Fachmann, dass auch eine Verwendung mit mehreren Hinweissymbolen möglich ist.

### Bezugszeichenliste

- 10: Vorrichtung
- 12: Eingangsschnittstelle
- 14: Analyseeinheit
- 16: Ausgangsschnittstelle
- 18: System
- 20: Augmented Reality/AR-Anzeigegerät
- 22: Projektionseinheit
- 24: Hinweis
- 26: Frontscheibe
- 28: Kraftfahrzeug
- 30: Fahrzeugmodul
- 32: Frontkamera
- 34: Informationscontainer
- S1-S4: Verfahrensschritte

## Patentansprüche

1. Vorrichtung (10) zur verbesserten Visualisierung eines Hinweises (24) in einem Kraftfahrzeug (28), mit:
- einer Eingangsschnittstelle (12) zum Empfangen von Hinweis-Daten mit Informationen zu dem Hinweis (24) und Fahrzeugdaten mit Informationen zu einem Fahrzeugzustand;
- einer Analyseeinheit (14) zum Bestimmen einer Darstellung für den Hinweis (24) basierend auf den Hinweis-Daten und den Fahrzeugdaten und zum Erzeugen eines Steuerbefehls zum Steuern eines AR-Anzeigegeräts (20) basierend auf der Darstellung für den Hinweis (24);
- einer Ausgangsschnittstelle (16) zum Übermitteln des Steuerbefehls an das AR-Anzeigegerät (20),
**dadurch gekennzeichnet, dass**
der Steuerbefehl eine dynamische Darstellung des Hinweises (24) bewirkt, wobei anhand der Dynamik der Darstellung des Hinweises (24) ein Gültigkeitsbereich für den Hinweis vermittelbar ist.

2. Vorrichtung (10) nach dem vorstehenden Anspruch, **dadurch gekennzeichnet, dass** die Ausgangsschnittstelle (16) zum Übermitteln des Steuerbefehls an ein AR-Anzeigegerät (20) in Form eines AR HUDs ausgebildet ist und vorzugsweise zur Installation in ein Kraftfahrzeug (28) ausgebildet ist und besonders bevorzugt Teil eines Bordcomputers, Infotainment- und/oder Navigationssystems ist.

3. Vorrichtung (10) nach einem der vorstehenden Ansprüche, **dadurch gekennzeichnet, dass** die Analyseeinheit (14) einen Steuerbefehl bestimmt, der eine dynamische Darstellung des Hinweises (24) bewirkt, die eine Darstellung eines Countdowns umfasst, wobei der Countdown vorzugsweise grafisch als Balken und/oder numerisch als Prozentzahl darstellbar ist.

4. Vorrichtung (10) nach einem der vorstehenden Ansprüche, **dadurch gekennzeichnet, dass** der Gültigkeitsbereich für den Hinweis (24) eine örtliche, zeitliche und/oder fahrzeugzustandabhängige Gültigkeit umfasst.

5. Vorrichtung (10) nach einem der vorstehenden Ansprüche, **dadurch gekennzeichnet, dass** die Eingangsschnittstelle (12) dazu ausgebildet ist, Fahrzeugdaten mit Informationen zu einem Fahrzeugzustand zu empfangen, wobei der Fahrzeugzustand eine Geschwindigkeit, Orientierung und/oder Position des Kraftfahrzeugs (28) umfasst.

6. Vorrichtung (10) nach einem der vorstehenden Ansprüche, **dadurch gekennzeichnet, dass** die Analyseeinheit (14) einen Steuerbefehl bestimmt, der eine dynamische Darstellung des Hinweises (24) in Form eines Informationscontainers (34) bewirkt, wobei der Informationscontainer (34) in einer vordefinierten Distanz vor dem Kraftfahrzeug (28) fix zur Umgebung per Augmented-Reality verortet ist.

7. Vorrichtung (10) nach dem vorstehenden Anspruch, **dadurch gekennzeichnet, dass** die Analyseeinheit (14) einen Steuerbefehl bestimmt, der ein Verschwinden des Informationscontainers (34) bei Erreichen seiner in der Umgebung verorteten Position bewirkt, vorzugsweise basierend darauf, ob der Informationscontainer (34) eine temporär relevante Information umfasst oder ein Verbleiben des Informationscontainers (34) vor dem Kraftfahrzeug (28) bei und nach Erreichen seiner in der Umgebung verorteten Position bewirkt, vorzugsweise basierend darauf, ob eine Bedienhandlung des Fahrers erforderlich ist.

8. System (18) zur verbesserten Visualisierung eines Hinweises (24) in einem Kraftfahrzeug (28), mit:
- einer Vorrichtung (10) nach einem der vorgenannten Ansprüche; und
- einem AR-Anzeigegerät (20), insbesondere einem Head-Up-Display an einem Kraftfahrzeug (28), zum Ausgeben einer dynamischen Darstellung des Hinweises (24) in Reaktion auf einen Steuerbefehl der Vorrichtung (10).

9. Verfahren zur verbesserten Visualisierung eines Hinweises (24) in einem Kraftfahrzeug (28), mit:
- Empfangen (S1) von Hinweis-Daten mit Informationen zu dem Hinweis (24) und Fahrzeugdaten mit Informationen zu einem Fahrzeugzustand;
- Bestimmen (S2) einer Darstellung für den Hinweis (24) basierend auf den Hinweis-Daten und den Fahrzeugdaten;
- Erzeugen (S3) eines Steuerbefehls zum Steuern eines AR-Anzeigegeräts (20) basierend auf der Darstellung für den Hinweis (24);
- Übermitteln (S4) des Steuerbefehls an das AR-Anzeigegerät (20),
**dadurch gekennzeichnet, dass**
der Steuerbefehl eine dynamische Darstellung des Hinweises (24) bewirkt, wobei anhand der Dynamik der Darstellung des Hinweises (24) ein Gültigkeitsbereich für den Hinweis (24) vermittelbar ist.

10. Computer-Programm mit Programm-Code-Mitteln, um alle Schritte eines Verfahrens nach dem vorstehenden Anspruch durchzuführen, wenn das Computer-Programm auf einem Computer oder einer entsprechenden Recheneinheit ausgeführt wird.
